(19) Europäisches Patentamt
European Patent Office
Office européen des brevets

(11) **EP 3 095 302 B1**

(12) **EUROPÄISCHE PATENTSCHRIFT**

(45) Veröffentlichungstag und Bekanntmachung des Hinweises auf die Patenterteilung:
**23.08.2017 Patentblatt 2017/34**

(21) Anmeldenummer: **15708694.3**

(22) Anmeldetag: **13.01.2015**

(51) Int Cl.:
***H05B 33/08*** *(2006.01)*

(86) Internationale Anmeldenummer:
**PCT/AT2015/050009**

(87) Internationale Veröffentlichungsnummer:
**WO 2015/103659 (16.07.2015 Gazette 2015/28)**

(54) **TREIBERSCHALTUNG FÜR LEUCHTMITTEL, INSBESONDERE LEDS**

DRIVER CIRCUIT FOR LIGHTING MEANS, PARTICULARLY LEDS

CIRCUIT D'ATTAQUE POUR MOYENS D'ÉCLAIRAGE, EN PARTICULIER POUR DES LED

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.01.2014 AT 112014 U**

(43) Veröffentlichungstag der Anmeldung:
**23.11.2016 Patentblatt 2016/47**

(73) Patentinhaber: **Tridonic GmbH & Co. KG**
**6851 Dornbirn (AT)**

(72) Erfinder:
• **MARENT, Günter**
**A-6780 Bartholomäberg (AT)**
• **MITTERBACHER, Andre**
**A-6850 Dornbirn (AT)**
• **DUENSER, Mathias**
**A-6700 Bludenz (AT)**
• **MOHR, Martin**
**A-6845 Hohenems (AT)**

(74) Vertreter: **Rupp, Christian**
**Mitscherlich PartmbB**
**Patent- und Rechtsanwälte**
**Sonnenstraße 33**
**80331 München (DE)**

(56) Entgegenhaltungen:
**DE-A1-102012 007 478    GB-A- 2 502 992**
**US-A1- 2010 079 081**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft insbesondere einen Konverter für den Betrieb wenigstens eines Leuchtmittels, z.B. eine Treiberschaltung für den Betrieb wenigstens einer LED, sowie ein entsprechendes Verfahren zum Betreiben eines Leuchtmittels.

Aus dem Stand der Technik sind Treiberschaltungen zum Betreiben von LEDs grundsätzlich bekannt. Eine solche Treiberschaltung wird von einer elektrischen Versorgungsquelle versorgt, und umfasst einen Resonanzkreis, wie z.B. einen LLC-Konverter, der dafür zuständig ist, Strom über eine galvanische Sperre bzw. galvanische Barriere von einer Primärseite auf eine Sekundärseite der galvanischen Sperre zu übertragen. Zweck dieser Übertragung von elektrischer Energie ist die Versorgung einer auf der Sekundärseite geschalteten LED-Strecke mit Strom.

Ein solcher Resonanzkreis bzw. eine solche Treiberschaltung wird als Konstantstrom-Konverter betrieben. Hierzu kann ein Regelkreis zur Regelung des LED-Stroms vorgesehen sein, wobei nach dem Stand der Technik ein Istwert des LED-Stroms auf der Sekundärseite der galvanischen Sperre gemessen wird. Diese Istwert-Messung muss allerdings an einen primärseitigen Steuerkreis bzw. an eine primärseitige Steuerschaltung zurückgeführt werden, um die Treiberschaltung entsprechend zu steuern.

Nachteilig bei dieser Ausgestaltung ist die Tatsache, dass die Rückführung des Istwerts des LED-Stroms zurück zur primärseitigen Steuerschaltung eine Potentialtrennung und somit einen Optokoppler erfordert.

Es besteht indessen das Bestreben, dass ein vorgegebener Soll-Wert für den LED-Strom rein durch Messen eines primärseitigen Stromes der Treiberschaltung garantiert werden kann. Um eine sekundärseitige Messung des LED-Stroms zu vermeiden, kann dann primärseitig ein Strom des Resonanzkreises gemessen werden, um entsprechend den Resonanzkreis zu steuern. Bei dieser Regelung wird für jeden einzustellenden Soll-Wert für den Strom durch die LED-Strecke ein Soll-Wert für den primärseitigen Strom abgelegt.

Indessen lässt dieser Ansatz unberücksichtigt, dass es keinen strengen Zusammenhang zwischen dem primärseitigen Strom und dem LED-Strom gibt, sondern dass vielmehr dieser Zusammenhang eine weitere Einflussgröße hat, nämlich die LED-Spannung. Veränderungen der LED-Spannung können sich ergeben, beispielsweise durch starke Temperaturveränderungen, aber auch durch eine Veränderung der LED-Strecke und insbesondere durch eine Veränderung der Anzahl und/oder der Art der angeschlossenen LEDs.

Der Erfindung liegt das technische Problem zugrunde, eine Treiberschaltung zum betreiben einer LED-Strecke und ein entsprechendes Betriebsverfahren anzugeben, bei denen die primärseitige Regelung verbessert werden kann und insbesondere die oben genannten Nachteile beseitigt werden können.

Dieses Problem wird nunmehr durch die Kombination der Merkmale der unabhängigen Ansprüche gelöst. Die abhängigen Ansprüche bilden den zentralen Gedanken der Erfindung vorteilhaft weiter.

Gemäß einem ersten Aspekt der Erfindung ist vorgesehen eine Treiberschaltung für Leuchtmittel, insbesondere für eine oder mehrere LEDs. Die Treiberschaltung umfasst eine mit Spannung versorgbare und mittels wenigstens eines Schalters getaktete Schaltung, die einen Resonanzkreis speist. Die Treiberschaltung umfasst einen auf den Resonanzkreis folgenden Übertrager zum Übertragen von elektrischer Energie von einer Primärwicklung zu einer Sekundärwicklung. Der Resonanzkreis ist mit der Primärwicklung gekoppelt. Das Leuchtmittel bzw. die Leuchtmittel ist/sind ausgehend von der Sekundärwicklung mit Strom versorgbar. Die Treiberschaltung umfasst eine Steuereinheit, der ein den Strom durch den Resonanzkreis wiedergebendes Strom-Ist-Signal und ein die an der Primärwicklung anliegende Spannung wiedergebendes Spannungs-Ist-Signal zurückgeführt sind.

Die Steuereinheit ist dazu ausgebildet, ausgehend von den primärseitig gewonnenen Strom-Ist-Signal und Spannungs-Ist-Signal eine indirekte Wiedergabe des sekundärseitigen Stroms zu ermitteln.

Alternativ wird eine Korrektur des zurückgeführten primärseitigen Stroms um den Magnetisierungsstrom, der durch Verarbeitung der zurückgeführten primärseitigen Spannung erfasst wird, durchgeführt.

Gemäß einem weiteren Aspekt der Erfindung ist vorgesehen ein Verfahren zum Betreiben von Leuchtmitteln, insbesondere LEDs. Eine mittels wenigstens eines Schalters getaktete Schaltung wird mit Spannung versorgt und speist einen Resonanzkreis. Ein auf den Resonanzkreis folgender Übertrager überträgt elektrische Energie von einer Primärwicklung zu einer Sekundärwicklung. Der Resonanzkreis ist mit der Primärwicklung gekoppelt. Die Leuchtmittel werden ausgehend von der Sekundärwicklung mit Strom versorgt. Einer Steuereinheit werden ein den Strom durch den Resonanzkreis wiedergebendes Strom-Ist-Signal und ein die an der Primärwicklung anliegende Spannung wiedergebendes Spannungs-Ist-Signal zurückgeführt. Die Steuereinheit ermittelt eine indirekte Wiedergabe des sekundärseitigen Stroms ausgehend von den primärseitig gewonnenen Strom-Ist-Signal und Spannungs-Ist-Signal.

Gemäß einem weiteren Aspekt der Erfindung ist vorgesehen ein Computersoftware-Programmprodukt, das ein derartiges Verfahren implementiert, wenn es in einer Recheneinrichtung läuft.

Gemäß einem weiteren Aspekt der Erfindung ist vorgesehen eine Steuereinheit, insbesondere ASIC oder Mikrokontroller oder Hybridversion davon, zur Steuerung einer Treiberschaltung für Leuchtmittel, insbesondere für eine oder mehrere LEDs. Die Treiberschaltung umfasst eine mit Spannung versorgbare-und mittels wenigstens eines Schalters getaktete Schaltung, die einen Resonanzkreis speist. Die Treiberschaltung umfasst auch einen auf den Resonanzkreis folgenden Übertrager zum Übertragen von elektrischer Energie von einer Primärwicklung zu einer Sekundärwicklung. Der Resonanzkreis ist mit der Primärwicklung gekoppelt ist, und die Leuchtmittel sind ausgehend von der Sekundärwicklung mit Strom versorgbar. Die Steuereinheit ist dazu ausgebildet, wenigstens einen Schalter der getakteten Schaltung zu steuern. Der Steuereinheit sind ein den Strom durch den Resonanzkreis wiedergebendes Strom-Ist-Signal und ein die an der Primärwicklung anliegende Spannung wiedergebendes Spannungs-Ist-Signal zurückführbar. Die Steuereinheit ist dazu ausgebildet, ausgehend von den primärseitig gewonnenen Strom-Ist-Signal und Spannungs-Ist-Signal eine indirekte Wiedergabe des sekundärseitigen Stroms zu ermitteln.

Gemäß einem weiteren Aspekt der Erfindung ist vorgesehen eine integrierte Schaltung, insbesondere ASIC oder Microcontroller oder eine Hybridversion davon, die zur Implementierung des obigen Verfahrens ausgebildet ist.

Gemäß einem weiteren Aspekt der Erfindung ist vorgesehen eine Leuchte, aufweisend eine LED-Strecke und eine obenbeschriebene Treiberschaltung zur Versorgung der LED-Strecke mit Strom.

Die Steuereinheit kann dazu ausgebildet sein, zur Regelung des Stroms durch die Leuchtmittel wenigstens einen Schalter der getakteten Schaltung abhängig von der ermittelten indirekten Wiedergabe des sekundärseitigen Stroms zu takten. Die Stellgröße für die Regelung ist z.B. die Frequenz und/oder das Tastverhältnis der Steuerung des wenigstens einen Schalters der getakteten Schaltung.

Die Steuereinheit kann dazu ausgebildet sein, anhand der ermittelten indirekten Wiedergabe des sekundärseitigen Stroms einen Fehlerzustand auf der Sekundärseite, insbesondere einen Fehlerzustand der Leuchtmittel, zu erfassen. Davon abhängig kann die Steuereinheit die Ansteuerung der getakteten Schaltung verändern und/oder ein Fehler-Signal ausgeben.

Die Ermittlung der indirekten Wiedergabe des sekundärseitigen Stroms kann durch eine Messung und Verarbeitung, vorzugsweise durch eine kontinuierliche Messung und Verarbeitung, der an der Primärwicklung anliegende Spannung erfolgen.

Die an der Primärwicklung anliegende Spannung kann zur Ermittlung des auf der Primärseite des Übertragers fließenden Magnetisierungsstroms dienen.

Die Treiberschaltung kann Mittel aufweisen, insbesondere einen Integrierer und einen Multiplizierer, zum Ermitteln des auf der Primärseite des Übertragers fließenden Magnetisierungsstroms ausgehend vom Spannungs-Ist-Signal bzw. von der an der Primärwicklung anliegenden Spannung.

Die Mittel können dazu ausgelegt sein, das Spannungs-Ist-Signal bzw. die an der Primärwicklung anliegende Spannung zu integrieren und zu kalibrieren. Das Integrieren kann vor dem Kalibrieren stattfinden oder umgekehrt.

Die Kalibrierung durch insbesondere den Multiplizierer kann darin bestehen, das gegebenenfalls integrierte Spannungs-Ist-Signal durch den Wert der Hauptinduktivität zum Führen des Magnetisierungsstroms zu teilen.

Die Treiberschaltung kann aufweisen einen Subtrahierer zum Ermitteln des durch die Primärwicklung fließenden Stroms als indirekte Wiedergabe des sekundärseitigen Stroms. Das Ermitteln kann durch Subtrahieren des Magnetisierungsstroms von dem Strom durch den Resonanzkreis erfolgen.

Die Treiberschaltung kann aufweisen einen Gleichrichter und einen Tiefpassfilter zum Gleichrichten und Tiefpassfiltern der ermittelten indirekten Wiedergabe des sekundärseitigen Stroms.

Die Treiberschaltung kann aufweisen Mittel zum Multiplizieren der gegebenenfalls gleichgerichteten und tiefpassgefilterten ermittelten indirekten Wiedergabe des sekundärseitigen Stroms mit dem Verhältnis der Windungszahlen von Primär- und Sekundärseite.

Die Primärwicklung kann Bestandteil des primärseitigen Resonanzkreises sein. Alternativ oder zusätzlich dazu kann der Resonanzkreis als LLC-Resonanzkreis ausgestaltet sein.

Die getaktete Schaltung kann von einer DC-Spannung versorgbar sein. Alternativ oder zusätzlich dazu kann die getaktete Schaltung ein Wechselrichter sein, und z.B. in Form einer Halbbrückenschaltung ausgestaltet sein.

Die Erfindung bezieht sich auf insbesondere eine LLC-Topologie zum Betrieb von LED Modulen. Dabei speist eine Halbbrückenschaltung einen Resonanzkreis, der dann die Energie über einen Transformator auf die Sekundärseite überträgt, die typischerweise einen Energiespeicherelement wie z.B. einen Kondensator aufweist, der wiederrum die Spannungsversorgung für die LED Strecke darstellt.

Ziel ist es nunmehr die Halbbrücke derart zu betreiben, dass der Strom durch die LED Strecke konstant ist. Der Betrieb der Halbbrücke erfolgt vorzugsweise über eine Frequenzveränderung der Halbbrücke bzw. über eine Veränderung der Schaltfrequenz der Schalter der Halbbrücke. Alternativ kann auch eine Veränderung des Tastverhältnisses in Betracht kommen.

Gleichzeitig soll vermieden werden, dass Messsignale von der Sekundärseite über die SELV-Barriere (Sicherheitskleinspannungssperre) hinweg zur Primärseite und dem dort vorgesehenen Steuerelement übertragen werden müssen.

Die Erfindung sieht nunmehr vor, dass zusätzlich zu der Strommessung bzgl. des Stroms durch die primärseitige Induktivität auch die Spannung über die primärseitige Wicklung, also am Ausgang des Resonanzkreises, erfasst wird.

Das Spannungssignal wird vorzugsweise integriert und dann kalibriert, um elektrische Kennparameter der Induktivität - Kopplung und Induktivitätswert - zu berücksichtigen. Dieses derart verarbeitete Spannungssignal wird dann von dem Stromsignal subtrahiert, wobei die dadurch entstehende Differenzgröße eine indirekte Wiedergabe des sekundärseitigen Stroms darstellt.

Die über die ausgehend von der Spannungsmessung und der folgenden Verarbeitung entstehende zu subtrahierende Größe gibt also den Magnetisierungsstrom wieder, der zur korrekten indirekten Bestimmung des sekundärseitigen Stroms von den primärseitigen Strom subtrahiert wird.

Es liegt also eine Regelschleife vor, wobei als Ist-Größe ein um den Magnetisierungsstrom korrigierter primärseitiger Strom verwendet wird und dieser eben als Ist-Größe einem Regelalgorithmus zugeführt wird. Die Stellgröße ist die Taktung, insbesondere die Frequenz der Halbbrücke.

Die Korrektur des primärseitigen Stroms um den Magnetisierungsstrom, die durch Verarbeitung der primärseitigen Spannung erfasst wird, kann vorzugsweise innerhalb der integrierten Schaltung (ASIC, Mikrokontroller, etc.) erfolgen, die auch den Regelalgorithmus implementiert und ein Ansteuersignal für die Taktung der Halbbrücke ausgibt.

Bei der vorliegenden Erfindung ist es indessen wichtig, dass nicht nur ein Messwert berücksichtigt wird, sondern dass durchgehend die Ausgangsspannung gesampled wird, um beispielsweise das beschriebene Integrieren und dann Kalibieren, hinsichtlich der Spulenparameter durchzuführen. Durchgehend bedeutet hier für eine gewisse Zeitperiode, vorzugsweise für die gesamte Zeit des Betriebs der Leuchtmittel bzw. der LEDs.

Ein Vorteil der Erfindung ist es also, dass keine sekundärseitigen Messwerte zur Primärseite zurückgeführt werden müssen. Somit kann auf eine aufwendige Rückkopplung über die galvanische Sperre mittels z.B. eines Optokopplers verzichtet werden.

Ein weiterer Vorteil der Erfindung ist es, dass bei der Erfassung der über den Übertrager übertragenen elektrischen Leistung etwaige variable Magnetisierungseffekte ziemlich genau berücksichtigt werden können.

Nachfolgend wird die Erfindung außerdem im Hinblick auf die Figuren beschrieben.

Fig. 1 zeigt schematisch den Aufbau einer erfindungsgemäßen Treiberschaltung Schaltung zur Versorgung von Leuchtmitteln, insbesondere zur Versorgung von LEDs bzw. einer LED-Strecke,

Fig. 2 zeigt ein Ausführungsbeispiel einer Treiberschaltung gemäß der vorliegenden Erfindung,

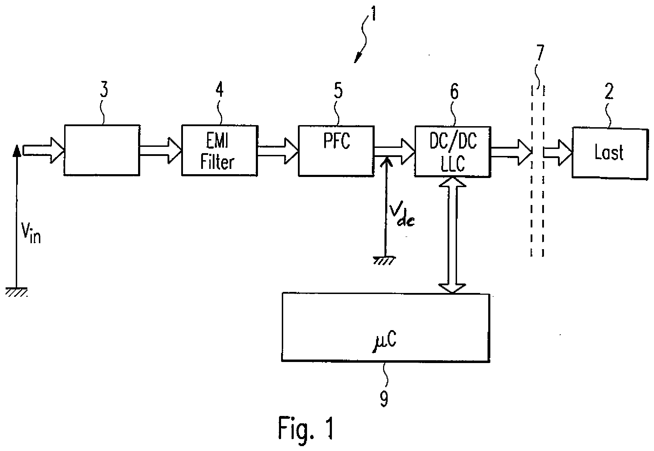

Fig. 1 zeigt in schematischer Form den Aufbau einer Treiberschaltung 1 zum Betreiben einer Last 2. Insbesondere handelt es sich bei dieser Treiberschaltung um eine Schaltung zum Betreiben einer LED-Strecke aufweisend eine oder mehrere LEDs. Die LEDs der LED-Strecke können in Serie, in parallel oder gemäß einer Serien/parallel-Schaltung angeordnet sein.

Die Treiberschaltung 1 wird vorzugsweise von einer Eingangsspannung Vin z.B. in Form einer Wechselspannung bzw. Netzspannung gespeist. Die Eingangsspannung Vin wird eingangsseitig vorzugsweise einem Gleichrichter 3 und einem Filter bzw. EMI-Filter 4 (electromagnetic interference) zum Filtern von elektromagnetischen Störungen zugeführt.

Die gleichgerichtete und gegebenenfalls gefilterte Eingangsspannung wird vorzugsweise einer Leistungsfaktorkorrektur-Schaltung (PFC) 5 zugeführt, die ausgangsseitig eine Versorgungsspannung Vdc erzeugt. Diese Versorgungsspannung Vdc ist vorzugsweise eine DC-Spannung bzw. eine näherungsweise konstante Busspannung gegebenenfalls aufweisend eine Restwelligkeit. Beispielsweise kann die Versorgungsspannung Vdc eine 400 V DC-Spannung sein.

Alternativ kann die Versorgungsspannung Vdc auch eine Gleichspannung bzw. eine konstante Spannung wie z.B. eine Batteriespannung sein, wobei in diesem Fall auf den Gleichrichter 3, den Filter 4 und/oder die Leistungsfaktorkorrektur-Schaltung 5 vorzugsweise verzichtet werden kann.

Die Versorgungsspannung Vdc versorgt einen Wandler 6 in Form vorzugsweise eines DC/DC-Konverters. Der vorzugsweise getaktete Wandler 6 umfasst einen Resonanzkreis, wie z.B. einen LLC-Konverter, der dafür zuständig ist, Strom über eine galvanische Sperre bzw. galvanische Barriere 7 von einer Primärseite auf eine Sekundärseite der galvanischen Sperre zu übertragen. Der Wandler 6 ist dabei auf der Primärseite angeordnet und die Last 2 auf der Sekundärseite. Die Treiberschaltung 1 dient zur Versorgung der auf der Sekundärseite geschalteten Last 2 bzw. LED-Strecke mit Strom.

Der Wandler 6 ist ausgangsseitig mit der galvanischen Sperre 7, wie z.B. einer SELV Sperre (Sicherheitskleinspannungssperre), verbunden. Diese galvanische Sperre 7 wird z.B. durch einen Übertrager gebildet. Der Übertrager kann in Form eines Transformators ausgestaltet sein. Der Transformator kann an den Wandler 6 angeschlossen sein, oder kann ein Teil des Wandlers 6 sein. Über diese galvanische Sperre 7 bzw. über den Übertrager wird Strom von der Primärseite der galvanischen Sperre auf die Sekundärseite der galvanischen Sperre übertragen.

Die Übertragung von Strom bzw. von elektrischer Energie von der Primärseite zur Sekundärseite der galvanischen Sperre 7 wird durch eine Steuereinheit 9 gesteuert bzw. geregelt. Die Steuereinheit 9 ist auf der Primärseite der galvanischen Sperre 7 angeordnet. Zur Einstellung eines gewünschten Stroms durch die LEDs werden auf der Primärseite elektrische Größen gemessen und der Steuereinheit 9 zurückgeführt. Auf Basis dieser zurückgeführten Messwerte steuert die Steuereinheit 9 den Wandler 6 derart, dass der gewünschte Strom durch die LEDs fließt. Die Steuereinheit sorgt dafür, dass die Last 2 in Form einer Lichtquelle insbesondere in Form einer LED-Strecke mit dem gewünschten Strom versorgt wird.

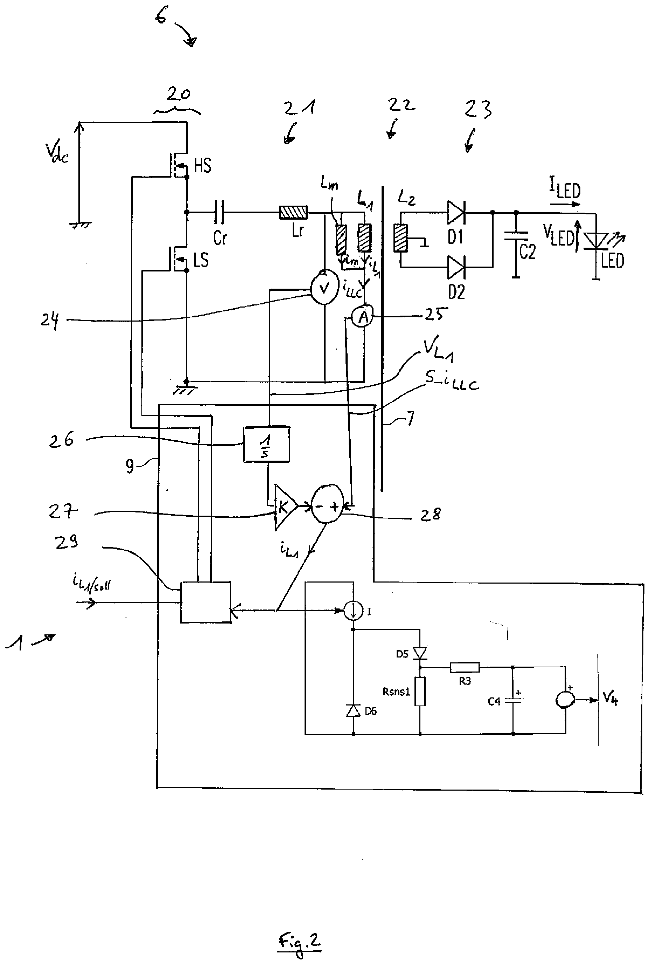

Fig. 2 zeigt ein Ausführungsbeispiel einer Treiberschaltung 1 zur Versorgung von Leuchtmitteln, insbesondere zur Versorgung von LEDs bzw. einer LED-Strecke. Fig. 2 zeigt insbesondere ein Ausführungsbeispiel für die Ausgestaltung des in Fig. 1 Wandlers 6 und der Steuereinheit 9.

Wie in Fig. 1 gezeigt, versorgt die Versorgungsspannung Vdc den Wandler 6 der Treiberschaltung 1. Eingangsseitig ist im Wandler 6 ein Schaltregler vorgesehen, der insbesondere als eine getaktete Schaltung bzw. einen Wechselrichter ausgestaltet sein kann. In Fig. 2 ist z.B. ein Wechselrichter in Form einer Halbbrückenschaltung 20 gezeigt. Die Halbbrückenschaltung 20 ist von der Versorgungsspannung Vdc versorgt und weist einen potentialniedrigeren Schalter LS und einen potentialhöheren Schalter HS auf. Erfindungsgemäß weist der Wechselrichter 2 zumindest einen Schalter auf. Als Wechselrichter mit einem Schalter kann z.B. ein Flyback-Konverter (nicht gezeigt) vorgesehen sein.

Die beiden Schalter LS, HS der Halbbrückenschaltung 20 können als Transistoren, z.B. FET oder MOSFET, ausgestaltet sein. Die Schalter LS, HS werden von jeweiligen Steuersignalen ausgehend von der Steuereinheit 9 gesteuert. Der potentialniedrigere Schalter LS ist mit einer primärseitigen Masse verbunden. Am potentialhöheren Schalter HS der Halbbrückenschaltung 20 liegt die Eingangsspannung Vdc an.

Am Mittelpunkt der Halbbrückenschaltung 20, d.h. zwischen beiden Schaltern LS, HS, ist ein Resonanzkreis 21 in Form z.B. eines Serienresonanzkreis angeschlossen. Alternativ kann erfindungsgemäß auch ein Parallelresonanzkreis am Mittelpunkt der Halbbrückenschaltung 20 angeschlossen sein. Der in Fig. 2 gezeigte Resonanzkreis 21 ist als Serienresonanzkreis ausgestaltet und umfasst Induktanz- und Kapazitätselemente. Insbesondere ist zwischen der primärseitiger Masse und dem Mittelpunkt der Halbbrückenschaltung 20 eine Serienschaltung aufweisend einen Kondensator bzw. Resonanzkondensator Cr, eine erste Spule bzw. Resonanzspule Lr, und eine weitere Spule L1. Der Resonanzkreis 21 wird in diesem Fall als LLC-Resonanzkreis bezeichnet. Der Kondensator Cr und die Spule Lr bilden vorzugsweise einen LC-Resonanzkreis.

Die Spule L1 ist vorzugsweise die Primärwicklung eines Übertragers in Form z.B. eines Transformators 22. Der Transformator 22 ist ein Beispiel einer galvanischen Sperre 7. Der in Fig. 2 gezeigte Transformator 22 umfasst die Primärwicklungen L1 und eine mit dieser Primärwicklung L1 gekoppelten Sekundärwicklung L2. Durch diese transformatorische Kopplung ergibt sich eine galvanische Sperre zwischen den Wicklungen L1, L2. Der Transformator 22 weist zusätzlich auch mindestens eine Streuinduktivität und eine Hauptinduktivität auf. Die Streuinduktivität (nicht gezeigt) kann in Serie zur Primärwicklung L1 vorgesehen sein. Die in Fig. 2 mit dem Referenzzeichen Lm gekennzeichnete Hauptinduktivität zum Führen des Magnetisierungsstroms $i_m$ befindet sich vorzugsweise parallel zur Primärwicklung L1.

Der Transformator 22 bildet insgesamt eine galvanische Sperre 7 zwischen einer Primärseite aufweisend die Primärwicklung L1 des Transformators 22 und einer Sekundärseite aufweisend die Sekundärwicklung L2 des Transformators 22. Der Wandler 6 sowie der Resonanzkreis 21 sind auf dieser Primärseite angeordnet. Die Last 2 bzw. die LED-Strecke ist auf der Sekundärseite angeordnet.

Durch die Sekundärwicklung L2 des Transformators 22 fließt im Betrieb vorzugsweise ein AC-Strom d.h. ein Wechselstrom. Die Spannung an der Sekundärwicklung L2 wird zwecks Gleichrichtung einem Gleichrichter 23 zugeführt.

Die Sekundärwicklung L2 des Transformators 22 weist eine Anzapfung bzw. Abzapfung, insbesondere eine Mittelpunktanzapfung. Diese Mittelpunktanzapfung bildet ein Potential des Gleichrichters 23 bzw. ein Potential der an der LED-Strecke anliegenden Spannung VLED, wobei dieses Potential insbesondere die sekundärseitige Masse darstellt.

Eine Klemme der Sekundärwicklung L2 ist mit der Anode einer ersten Diode D1 verbunden, und die andere Klemme der Sekundärwicklung L2 ist mit der Anode einer zweiten Diode D2 verbunden. Die jeweiligen Kathoden der Dioden D1, D2 sind zusammengeführt und bilden ein Ausgangspotential des Gleichrichters 23.

Der Gleichrichter 23 kann ausgangsseitig einen Speicherkondensator C2 speisen. Als Speicherkondensator C2 kann aufgrund seiner vergleichsweise hohen Kapazität vorzugsweise ein Elektrolytkondensator eingesetzt werden.

Parallel zum Speicherkondensator C2 sind die Leuchtmittel, vorzugsweise LEDs bzw. eine LED-Strecke, geschaltet. In Fig. 2 soll die dargestellte LED für eine oder mehrere LEDs repräsentativ sein. Vorzugsweise kann die von der Treiberschaltung 1 betriebene LED-Strecke eine Reihenschaltung von mehreren LEDs aufweisen. Alternativ können auch parallel angeordnete LEDs oder eine Kombination aus parallel und in Serie geschalteten LEDs versorgt werden.

Auf der Primärseite sind Mittel 25 zum Messen des primärseitigen Stroms bzw. des Stroms durch den Resonanzkreis 21. Vorzugsweise sind die Mittel 25 zum Messen des Stroms iLLC durch den Resonanzkreis 21 als ein Messwiderstand (nicht gezeigt) ausgestaltet. Der Messwiderstand kann in bekannter Weise in Serie zur Primärwicklung L1 des Transformators geschaltet sein. Vorzugsweise ist der Messwiderstand in Serie zur Parallelschaltung bestehend aus der Primärwicklung L1 und der Hauptinduktivität des Transformators geschaltet sein. Wenn nunmehr die an dem Messwiderstand anliegende Spannung der Steuereinheit 9 zurückgeführt wird, ist die Steuereinheit 9 in der Lage, eine primärseitige elektrische Kenngröße in Form des Stroms iLLC durch den Resonanzkreis 21 zu erfassen.

Erfindungsgemäß sind auf der Primärseite auch Mittel 24 zum Messen der Spannung VL1 über die primärseitige Wicklung L1. Gemäß einer einfachen Ausführungsform können zwei jeweils an den zwei Klemmen der Primärwicklung L1 angeschlossenen Messe-Leitungen der Steuereinheit 9 zurückgeführt werden. Die Steuereinheit 9 erhält somit eine direkte Information bezüglich der an der Primärwicklung L1 anliegenden Spannung VL1. Alternativ kann zwischen den zwei Klemmen der Primärwicklung L1 ein Spannungsteiler (nicht gezeigt) vorgesehen sein, wobei dann der Steuereinheit 9 eine Teilspannung des Spannungsteilers zurückgeführt wird, welche also ein die an der Primärwicklung L1 anliegende Spannung VL1 wiedergebendes Ist-Signal darstellt.

Durch die Information VL1 über die Spannung über die Primärwicklung L1 wird nunmehr erfindungsgemäß vorgeschlagen, indirekt den sekundärseitigen Strom bzw. den Strom ILED durch die LEDs zu ermitteln.

Die Steuereinheit 9 umfasst hierzu zunächst einen Integrierer 26. Als Integrierer kann z.B. eine aktive Schaltung eingesetzt werden, die einen Operationsverstärker umfassen kann. Der Aufbau eines Integrierers ist an sich bekannt. Ein Integrierer kann neben einem möglichen Operationsverstärker noch z.B. einen oder mehrere Widerstände und einen oder mehrere Kondensatoren aufweisen.

Das integrierte Signal wird zu Kalibrierungszwecken anschließend einem Multiplizierer 27 zugeführt. Das vom Integrierer 26 integrierte Signal wird mit einem Faktor K multipliziert. Dieser Faktor ist vorzugsweise K = 1 / Lm, wobei Lm die Hauptinduktivität, die den Magnetisierungsstrom führt, darstellt. Der Wert Lm ist an sich bekannt. Z.B. kann dieser Wert Lm der Hauptinduktivität für den Transformator 22 in bekannter Weise berechnet und/oder gemessen werden.

Wenn die Streuinduktivität des Transformators 22 vernachlässigt werden kann, kann die Hauptinduktivität Lm sich aus folgender Gleichung ergeben: L = Lm * k, wobei L1 der Wert der Induktivität der Primärwicklung L1 ist. Der Faktor k ist die magnetische Kopplung der Primärwicklung L1 bzw. des Transformators. Der Faktor k kann den magnetischen Kopplungsfaktor zwischen der Primär- und der Sekundärwicklung darstellen. Vorzugsweise erfolgt in der Produktion der Treiberschaltung eine Messung der Hauptinduktivität Lm bzw. des Kopplungsfaktors k. Dadurch kann eine noch genauere Erfassung des Stroms durch die Primärwicklung erzielt werden, da von Transformator zu Transformator durchaus Unterschiede betreffend die Hauptinduktivität feststellbar sind.

Zu beachten ist, dass das Signal der Spannung durch die Primärwicklung auch zuerst kalibriert, d.h. mit dem Faktor K multipliziert werden kann, und dann in einem nächsten Schritt integriert werden kann. Die Reihenfolge der Bearbeitung des Signals ist nicht entscheidend.

Das Ergebnis dieser Bearbeitung des Signals der Spannung durch die Primärwicklung gibt den Magnetisierungsstrom $i_m$ wieder:

$$i_m = \int (VL1) / Lm$$

Der Wert des Stroms iLLC durch den Resonanzkreis 21 bzw. das gemessene Signal, das den Strom iLLC durch den Resonanzkreis 21 wiedergibt, wird dann einem Subtrahierer 28 zugeführt. Einem zweiten Eingang des Subtrahierers 28 wird der Wert des Magnetisierungsstroms $i_m$ zugeführt. Der Subtrahierer 28 bildet die Differenz zwischen dem Strom iLLC durch den Resonanzkreis 21 und dem Magnetisierungsstroms im. Dadurch kann der Wert des Stroms, der durch die Primärwicklung L1 fließt, ermittelt werden. Dieser Strom iL1 wird von der Primärwicklung L1 zu der Sekundärwicklung L2 übertragen. Durch Regelung dieses Stroms iL1 kann somit mit gegenüber dem Stand der Technik erhöhter Genauigkeit der Strom durch die LEDs geregelt werden.

Der Integrierer 26, der Multiplizierer 27 und der Subtrahierer 28 können analog ausgestaltet sein. D.h. diese drei Einheiten arbeiten in diesem Fall mit analogen, elektrischen Größen wie beispielsweise elektrischen Spannungen. Der Multiplizierer ist also eine Schaltung, die das Produkt zweier analoger Signale bildet. Der Subtrahierer ist eine Schaltung, die die Differenz zweier analoger Signale bildet.

Alternativ können der Integrierer 26, der Multiplizierer 27 und der Subtrahierer 28 auch digital ausgestaltet sein, in dem sie mit digitalen Werten arbeiten. Diese Einheit sind dann Schaltungen, die ausgehend von digitalen Zahlen die jeweilige mathematische Operation durchführt. In diesem Fall können vorzugsweise Digital-Analog-Umsetzer und gegebenenfalls Analog-Digital-Umsetzer eingesetzt werden, um die gemessenen analogen Signalen in digitale Werte wandeln zu können und umgekehrt. Auch natürlich ist ein Mischbetrieb analog-digital möglich, wobei z.B. manche der Einheiten analog und manche digital ausgeführt sind.

Der Wert des Stroms iL1, der durch die Primärwicklung L1 fließt, kann einem Regelungseinheit 29 zugeführt werden. Diese Regelungseinheit 29 kann vorzugsweise einem Sollwert iL1/soll für diesen Strom iL1 durch die Primärwicklung L1 erhalten. Die Regelungseinheit 29 regelt dann den Strom iL1 auf den Sollwert iL1/soll, und steuert die Schalter HS, LS entsprechend. Die primärseitige Steuereinheit 9 steuert somit die Schalter HS, LS der getakteten Schaltung, insbesondere die Schaltfrequenz und/oder das Tastverhältnis dieser Schalter HS, LS, auf der Grundlage des ermittelten Stroms iL1 durch die Primärwicklung L1.

Alternativ kann die Regelungseinheit 29 einen Sollwert für den LED-Strom ILED erhalten. Diese Einheit 29 ist dazu ausgebildet, aus dem Sollwert für den Strom ILED durch die LEDs einen entsprechenden Sollwert iL1/soll für den Strom durch die Primärwicklung zu bilden.

Alternativ und optional kann der Stroms iL1 durch die Primärwicklung L1 weiter bearbeitet werden. Z.B. kann der Strom iL1 gleichgerichtet werden. Dies erfolgt in Fig. 2 durch die Dioden D5, D6. In Serie zur Diode D5 ist ein Widerstand Rsns1 vorgesehen. Parallel zu diesem Widerstand Rsns1 ist ein RC-Glied bestehend aus einem Widerstand R3 und einem Kondensator C4 geschaltet. Das RC-Glied ist als Tiefpass ausgestaltet. Diese Funktionen Gleichrichten und Tiefpassfilter können alternativ digital ausgeführt werden, wie bereits im Zusammenhang mit den Einheiten Integrierer 26, Multiplizierer 27 und Subtrahierer 28 erläutert wurde.

Daraus ergibt sich ein gleichgerichtetes, tiefpassgefiltertes Signal V4, das den Strom durch die LEDs wiedergibt. Dieses Signal V4 kann von einer Regelungseinheit (nicht gezeigt) der Steuereinheit auf einen Sollwert geregelt werden. Dadurch kann wiederum indirekt der Strom durch die LEDs geregelt werden. Diese Regelung des Signals V4 erfolgt alternativ zur Regelung des Stroms iL1 durch die Primärwicklung.

Optional kann das Signal V4 zusätzlich noch mit dem Verhältnis der Windungszahlen n1, n2 der Primärwicklung L1 und der Sekundärwicklung L2 multipliziert werden, um den Wert des Stroms durch die LEDs genauer zu ermitteln. Dieses Verhältnis der Windungszahlen kann aber auch direkt von der Regelungseinheit berücksichtigt werden.

**Patentansprüche**

1. Treiberschaltung (1) für Leuchtmittel, insbesondere für eine oder mehrere LEDs, aufweisend:

   - einen Resonanzkreis,
   - eine mit Spannung (Vdc) versorgbare und mittels wenigstens eines Schalters (LS, HS) getaktete Schaltung (20), die den Resonanzkreis (21) speist,
   - einen auf den Resonanzkreis (21) folgenden Übertrager (22) zum Übertragen von elektrischer Energie von einer Primärwicklung (L1) zu einer Sekundärwicklung (L2), wobei der Resonanzkreis (21) mit der Primärwicklung (L1) gekoppelt ist, und die Leuchtmittel ausgehend von der Sekundärwicklung (L2) mit Strom versorgbar sind,
   - eine Steuereinheit (9),
   wobei die Primärwicklung (L1) Bestandteil des primärseitigen Resonanzkreises (21) ist, und/oder wobei der Resonanzkreis (21) als LLC-Resonanzkreis ausgestaltet ist, **dadurch gekennzeichnet, dass** der Steuereinheit ein den Strom (iLLC) durch den Resonanzkreis (21) wiedergebendes Strom-Ist-Signal (S_iLLC) und ein die an der Primärwicklung (L1) anliegende Spannung wiedergebendes Spannungs-Ist-Signal (VL1) zurückgeführt sind, und dass die Steuereinheit (9) dazu ausgebildet ist, ausgehend von den primärseitig gewonnenen Strom-Ist-Signal (S_iLLC) und Spannungs-Ist-Signal (VL1) eine indirekte Wiedergabe des sekundärseitigen Stroms zu ermitteln.

2. Treiberschaltung (1) gemäß Anspruch 1, wobei die Steuereinheit (9) dazu ausgebildet ist, zur Regelung des Stroms durch die Leuchtmittel wenigstens einen Schalter (LS, HS) der getakteten Schaltung (20) abhängig von der ermittelten indirekten Wiedergabe des sekundärseitigen Stroms zu takten, wobei die Stellgröße für die Regelung z.B. die Frequenz und/oder das Tastverhältnis ist.

3. Treiberschaltung (1) gemäß einem der vorigen Ansprüche, wobei die Steuereinheit (9) dazu ausgebildet ist, anhand der ermittelten indirekten Wiedergabe des sekundärseitigen Stroms einen Fehlerzustand auf der Sekundärseite, insbesondere einen Fehlerzustand der Leuchtmittel, zu erfassen und davon abhängig die Ansteuerung der getakteten Schaltung (20) zu verändern und/oder ein Fehler-Signal auszugeben.

4. Treiberschaltung (1) gemäß einem der vorigen Ansprüche, wobei die Ermittlung der indirekten Wiedergabe des sekundärseitigen Stroms durch eine Messung und Verarbeitung, vorzugsweise durch eine kontinuierliche Messung und Verarbeitung, der an der Primärwicklung (L1) anliegende Spannung erfolgt.

5. Treiberschaltung (1) gemäß Anspruch 4, wobei die an der Primärwicklung (L1) anliegende Spannung zur Ermittlung (S4) des auf der Primärseite des Übertragers (22) fließenden Magnetisierungsstroms (im) dient.

6. Treiberschaltung (1) gemäß einem der vorigen Ansprüche, aufweisend Mittel, insbesondere einen Integrierer (26) und einen Multiplizierer (27), zum Ermitteln (S4) des auf der Primärseite des Übertragers (22) fließenden Magnetisierungsstroms (im) ausgehend vom Spannungs-Ist-Signal (VL1) bzw. von der an der Primärwicklung (L1) anliegenden Spannung.

7. Treiberschaltung (1) gemäß Anspruch 6, wobei die Mittel dazu ausgelegt sind, das Spannungs-Ist-Signal (VL1) bzw. die an der Primärwicklung (L1) anliegende Spannung zu integrieren (S2) und zu kalibrieren (S3), wobei das Integrieren vor dem Kalibrieren stattfindet oder umgekehrt.

8. Treiberschaltung (1) gemäß Anspruch 7, wobei die Kalibrierung durch insbesondere den Multiplizierer (27) darin besteht, das gegebenenfalls integrierte Spannungs-Ist-Signal (VL1) durch den Wert der Hauptinduktivität (Lm) zum Führen des Magnetisierungsstroms (im).

9. Treiberschaltung (1) gemäß einem der vorigen Ansprüche 4 bis 8, aufweisend einen Subtrahierer (28) zum Ermitteln (S6), durch Subtrahieren (S6) des Ma-

gnetisierungsstroms ($i_m$) von dem Strom (iLLC) durch den Resonanzkreis (21), des durch die Primärwicklung (L1) fließenden Stroms (iL1) als indirekte Wiedergabe des sekundärseitigen Stroms.

10. Treiberschaltung (1) gemäß einem der vorigen Ansprüche, aufweisend einen Gleichrichter (D5, D6) und vorzugsweise einen Tiefpassfilter (R3, C4) zum Gleichrichten (S7) und vorzugsweise Tiefpassfiltern (S8) der ermittelten indirekten Wiedergabe des sekundärseitigen Stroms.

11. Treiberschaltung (1) gemäß einem der vorigen Ansprüche, aufweisend Mittel zum Multiplizieren (S9) der gegebenenfalls gleichgerichteten und tiefpassgefilterten ermittelten indirekten Wiedergabe des sekundärseitigen Stroms mit dem Verhältnis der Windungszahlen (n1, n2) von Primär- und Sekundärseite (L1, L2).

12. Treiberschaltung (1) gemäß einem der vorigen Ansprüche,
wobei die getaktete Schaltung (20) von einer DC-Spannung versorgbar ist, und/oder
wobei die getaktete Schaltung (20) ein Wechselrichter ist, und z.B. in Form einer Halbbrückenschaltung ausgestaltet ist.

13. Verfahren zum Betreiben von Leuchtmitteln, insbesondere LEDs, aufweisend folgende Schritte:

- eine mittels wenigstens eines Schalters (LS, HS) getaktete Schaltung (20) wird mit Spannung (Vdc) versorgt und speist einen Resonanzkreis (21),
- ein auf den Resonanzkreis (21) folgender Übertrager (22) überträgt elektrische Energie von einer Primärwicklung (L1) zu einer Sekundärwicklung (L2), wobei der Resonanzkreis (21) mit der Primärwicklung (L1) gekoppelt ist, und die Leuchtmittel ausgehend von der Sekundärwicklung (L2) mit Strom versorgt werden, wobei die Primärwicklung (L1) Bestandteil des primärseitigen Resonanzkreises (21) ist, und/oder wobei der Resonanzkreis (21) als LLC-Resonanzkreis ausgestaltet ist, **dadurch gekennzeichnet, dass** es weiter folgende Schritte aufweist :

- einer Steuereinheit (9) werden ein den Strom (iLLC) durch den Resonanzkreis (21) wiedergebendes Strom-Ist-Signal (S_iLLC) und ein die an der Primärwicklung (L1) anliegende Spannung wiedergebendes Spannungs-Ist-Signal (VL1) zurückgeführt, wobei die Steuereinheit (9) ausgehend von den primärseitig gewonnenen Strom-Ist-Signal (S_iLLC) und Spannungs-Ist-Signal (VL1) eine indirekte Wiedergabe des sekundärseitigen Stroms ermittelt

14. Steuereinheit (9), insbesondere ASIC oder Mikrokontroller oder Hybridversion davon, zur Steuerung einer Treiberschaltung (1) für Leuchtmittel, insbesondere für eine oder mehrere LEDs, wobei die Treiberschaltung (1) umfasst:

- eine mit Spannung (Vdc) versorgbare-und mittels wenigstens eines Schalters (LS, HS) getaktete Schaltung (20), die einen Resonanzkreis (21) speist,
- einen auf den Resonanzkreis (21) folgenden Übertrager (22) zum Übertragen von elektrischen Energie von einer Primärwicklung (L1) zu einer Sekundärwicklung (L2),
wobei der Resonanzkreis (21) mit der Primärwicklung (L1) gekoppelt ist, und die Leuchtmittel ausgehend von der Sekundärwicklung (L2) mit Strom versorgbar sind,
wobei die Steuereinheit (9) dazu ausgebildet ist, wenigstens einen Schalter (LS, HS) der getakteten Schaltung (20) zu steuern, wobei die Primärwicklung (L1) Bestandteil des primärseitigen Resonanzkreises (21) ist, und/oder wobei der Resonanzkreis (21) als LLC-Resonanzkreis ausgestaltet ist, **dadurch gekennzeichnet, dass** der Steuereinheit (9) ein den Strom (iLLC) durch den Resonanzkreis (21) wiedergebendes Strom-Ist-Signal (S_iLLC) und ein die an der Primärwicklung (L1) anliegende Spannung wiedergebendes Spannungs-Ist-Signal (VL1) zurückgeführt sind, und dass die Steuereinheit (9) dazu ausgebildet ist, ausgehend von den primärseitig gewonnenen Strom-Ist-Signal (S_iLLC) und Spannungs-Ist-Signal (VL1) eine indirekte Wiedergabe des sekundärseitigen Stroms zu ermitteln.

15. Leuchte, aufweisend eine LED-Strecke und eine Treiberschaltung (1) gemäß einem der Ansprüche 1 bis 12 zur Versorgung der LED-Strecke mit Strom.

**Claims**

1. A driver circuit (1) for lighting means, in particular, for one or more LEDs, having:

- a resonant circuit,
- a circuit (20), which can be supplied with voltage and is clocked by means of at least one switch (LS, HS), which circuit feeds the resonant circuit (21),
- a transmitter (22), which follows said resonant circuit (21) for transmitting electrical energy from a primary winding (L1) to a secondary winding (L2), wherein the resonant circuit (21) is coupled with the primary winding (L1), and the lighting means can be supplied with current from the secondary winding (L2),
- a control unit (9), wherein the primary winding (L1) is a component of the primary-side resonant circuit (21),

and/or wherein the resonant circuit (21) is designed as an LLC-resonant circuit, **characterized in that** an actual current signal (S_iLLC) which reproduces the current (iLLC) through the resonant circuit (21) and an actual voltage signal (VL1) that reproduces the voltage applied to the primary winding (L1) are fed back to the control unit, and that the control unit (9) is designed to determine an indirect reproduction of the secondary side current on the basis of the actual current signal (S_iLLC) and actual voltage signal (VL1 that were obtained on the primary side.

2. A driver circuit (1) according to Claim 1, wherein the control unit (9) is designed for regulation of the current through the lighting means to clock at least one switch (LS, HS) of the clocked circuit (20) dependent on the determined indirect reproduction of the secondary side current, wherein the manipulated variable for the regulation, for example, is the frequency and/or the duty cycle.

3. A driver circuit (1) according to any one of the preceding claims, wherein the control unit (9) is designed by means of the determined indirect reproduction of the secondary side current to detect an error condition on the secondary side, in particular an error condition of the lighting means, and dependent thereon to change the driving of the clocked circuit (20) and/or to output an error signal.

4. A driver circuit (1) according to any one of the preceding claims, wherein the determination of the indirect reproduction of the secondary side current takes place by a measurement and processing preferably by a continuous measurement and processing, of the voltage applied to the primary winding (L1).

5. A driver circuit (1) according to Claim 4, wherein the voltage applied to the primary winding (L1) is used for the determination (S4) of the magnetization current ($i_m$) flowing on the primary side of the transmitter (22).

6. A driver circuit (1) according to any one of the preceding claims, having means, in particular an integrator (26) and a multiplier (27), for the determination (S4) of the magnetization current ($i_m$) flowing on the primary side of the transmitter (22) on the basis of the actual voltage signal (VL1) or the voltage applied to the primary winding (L1).

7. A driver circuit (1) according to Claim 6, wherein the means are designed to integrate (S2) and to calibrate (S3) the actual voltage signal (VL1) or the voltage applied to the primary winding (L1), wherein the integration occurs before the calibration or vice versa.

8. A driver circuit (1) according to Claim 7, wherein the calibration by in particular, the multiplier (27) consists in the, if applicable, integrated actual voltage signal (VL1) by the value of the main inductance (Lm) for driving the magnetization current ($i_m$).

9. A driver circuit (1) according to any one of the preceding Claims 4 to 8, having a subtractor (28) for the determination (S6), by subtraction (S6) of the magnetization current ($i_m$) from the current (iLLC) through the resonant circuit (21), of the current (iL1) flowing through the primary winding (L1) as indirect reproduction of the secondary side current.

10. A driver circuit (1) according to any one of the preceding claims, having a rectifier (D5, D6) and preferably, a low-pass filter (R3, C4) for the rectification (S7) and preferably low-pass filtering (S8) of the determined indirect reproduction of the secondary side current.

11. A driver circuit (1) according to any one of the preceding claims, having means for the multiplication (S9) of the, if applicable, rectified and low-pass filtered determined indirect reproduction of the secondary side current by the ratio of the number of windings (n1, n2) of primary- and secondary sides (L1, L2).

12. A driver circuit (1) according to any one of the preceding claims,
wherein the clocked circuit (20) can be supplied by a DC voltage, and/or wherein the clocked circuit (20) is an inverter, and is designed, for example, in the form of a half-bridge circuit.

13. A method for the operation of lighting means, in particular LEDs, having the following steps:

- a circuit (20) clocked by means of at least one switch (LS, HS) is supplied with voltage (Vdc) and feeds a resonant circuit (21),
- a transmitter (22) following the resonant circuit (21) transmits electrical energy from a primary winding (L1) to a secondary winding (L2), wherein the resonant circuit (21) is coupled with the primary winding (L1), and the lighting means are supplied with current from the secondary winding (L2),

wherein the primary winding (L1) is a component of the primary side resonant circuit (21), and/or wherein the resonant circuit (21) is designed as a LLC resonant circuit, **characterized in that** it further has the following steps:

　　- an actual current signal (S-iLLC) reproducing the current (iLLC) through the resonant circuit (21) and an actual voltage signal (VL1) reproducing the voltage applied to the primary winding (L1) are fed to a control unit (9), wherein the control unit (9) determines an indirect reproduction of the secondary side current based on the actual current signal (S-iLLC) and actual voltage signal (VL1) obtained on the primary side.

14. A control unit (9), in particular, an ASIC or a microcontroller or a hybrid version thereof, for controlling a driver circuit (1) for lighting means, in particular, for one or more LEDs, wherein the driver circuit (1) comprises:

　　- a circuit (20), which is supplied with voltage (Vdc) and is clocked by means of at least one switch (LS, HS), which feeds a resonant circuit (21),
　　- a transmitter (22) which follows the resonant circuit (21) for transmission of electrical energy from a primary winding (L1) to a secondary winding (L2),

wherein the resonant circuit (21) is coupled with the primary winding (L1), and the lighting means can be supplied with current from the secondary winding (L2),
wherein the control unit (9) is designed to control at least one switch (LS, HS) of the clocked circuit (20), wherein the primary winding (L1) is a component of the primary side resonant circuit (21), and/or wherein the resonant circuit (21) is designed as a LLC resonant circuit,
**characterized in that**
an actual current signal (S_iLLC) reproducing the current (iLLC) through the resonant circuit (21) and an actual voltage signal (VL1) reproducing the voltage applied to the primary winding (L1) are fed back to the control unit (9),
and that
the control unit (9) is designed, to determine an indirect reproduction of the secondary side current based on the actual current signal (S_iLLC) and actual voltage signal (VL1) obtained on the primary side.

15. A light, having a LED section and a driver circuit (1), according to any one of Claims 1 to 12 for supplying the LED section with current.

## Revendications

1. Circuit d'attaque (1) destiné à des moyens d'éclairage, en particulier à une ou plusieurs LED, présentant :

　　- un circuit résonant,
　　- un circuit (20), pouvant être alimenté en tension (Vdc) et qui est cadencé au moyen d'au moins un commutateur (LS, HS), qui alimente le circuit résonant (21),
　　- un transformateur d'adaptation (22) qui suit le circuit résonant (21) et qui est destiné au transfert de l'énergie électrique à partir d'un enroulement primaire (L1) vers un enroulement secondaire (L2), le circuit résonant (21) étant couplé à l'enroulement primaire (L1), et les moyens d'éclairage pouvant être alimentés en courant à partir de l'enroulement secondaire (L2),
　　- une unité de commande (9),

l'enroulement primaire (L1) faisant partie intégrante du circuit résonant (21) côté primaire,
et/ou le circuit résonant (21) étant constitué en tant que circuit résonant LLC, **caractérisé en ce qu'**un signal de courant réel (S_iLLC) représentant le courant (iLLC) traversant le circuit résonant (21) et un signal de tension réelle (VL1) représentant la tension présente aux bornes de l'enroulement primaire (L1) sont renvoyés à l'unité de commande, et **en ce que**
l'unité de commande (9) est constituée pour, en partant du signal de courant réel (S_iLLC) et du signal de tension réelle (VL1) acquis côté primaire, déterminer une reproduction indirecte du courant côté secondaire.

2. Circuit d'attaque (1) selon la revendication 1, l'unité de commande (9) étant constituée pour, en vue de la régulation du courant traversant les moyens d'éclairage, cadencer au moins un commutateur (LS, HS) du circuit (20) cadencé en fonction de la reproduction indirecte déterminée du courant côté secondaire, la grandeur de réglage pour le réglage étant par exemple la fréquence et/ou le rapport cyclique.

3. Circuit d'attaque (1) selon l'une des revendications précédentes, l'unité de commande (9) étant constituée pour, à l'aide la reproduction indirecte déterminée du courant côté secondaire, détecter un état d'erreur sur le côté secondaire, en particulier un état d'erreur des moyens d'éclairage, et pour, en fonction de cela, modifier le pilotage du circuit (20) cadencé et/ou délivrer un signal d'erreur.

4. Circuit d'attaque (1) selon l'une des revendications précédentes, la détermination de la reproduction indirecte du courant côté secondaire s'effectuant par une mesure et un traitement, de préférence par une mesure et un traitement continus, de la tension présente aux bornes de l'enroulement primaire (L1).

5. Circuit d'attaque (1) selon la revendication 4, la tension présente aux bornes de l'enroulement primaire (L1) servant à la détermination (S4) du courant de magnétisation ($i_m$) s'écoulant sur le côté primaire du transformateur d'adaptation (22).

6. Circuit d'attaque (1) selon l'une des revendications précédentes, présentant des moyens, en particulier un intégrateur (26) et un multiplicateur (27), pour la détermination (S4) du courant de magnétisation ($i_m$) s'écoulant sur le côté primaire du transformateur d'adaptation (22) à partir du signal de tension réelle (VL1) ou respectivement de la tension présente aux bornes de l'enroulement primaire (L1).

7. Circuit d'attaque (1) selon la revendication 6, les moyens étant conçus pour intégrer (S2) et pour étalonner (S3) le signal de tension réelle (VL1) ou respectivement la tension présente aux bornes de l'enroulement primaire (L1), l'intégration survenant avant l'étalonnage ou inversement.

8. Circuit d'attaque (1) selon la revendication 7, l'étalonnage par le multiplicateur (27) en particulier consistant le signal de tension réelle (VL1) éventuellement intégré par la valeur de l'inductance principale (Lm) pour la conduite du courant de magnétisation ($i_m$).

9. Circuit d'attaque (1) selon l'une des revendications précédentes 4 à 8, présentant un soustracteur (28) pour la détermination (S6), par soustraction (S6) du courant de magnétisation ($i_m$) à partir du courant (iLLC) traversant le circuit résonant (21), du courant (iL1) s'écoulant à travers l'enroulement primaire (L1) en tant que reproduction indirecte du courant côté secondaire.

10. Circuit d'attaque (1) selon l'une des revendications précédentes, présentant un redresseur (D5, D6) et de préférence un filtre passe-bas (R3, C4) pour le redressement (S7) et de préférence le filtrage sur filtre passe-bas (S8) de la reproduction indirecte déterminée du courant côté secondaire.

11. Circuit d'attaque (1) selon l'une des revendications précédentes, présentant des moyen pour la multiplication (S9) de la reproduction indirecte déterminée, éventuellement redressée et filtrée sur filtre passe-bas, du courant côté secondaire par le rapport des nombres de spires (n1, n2) des côtés primaire et secondaire (L1, L2).

12. Circuit d'attaque (1) selon l'une des revendications précédentes, le circuit (20) cadencé pouvant être alimenté par une tension CC, et/ou le circuit (20) cadencé étant un onduleur et étant constitué par exemple sous la forme d'un circuit en demi-pont.

13. Procédé de fonctionnement de moyens d'éclairage, en particulier de LED, présentant les étapes suivantes :

- un circuit (20) cadencé au moyen d'au moins un commutateur (LS, HS) est alimenté avec une tension (Vdc) et alimente un circuit résonant (21),
- un transformateur d'adaptation (22) suivant le circuit résonant (21) transfère de l'énergie électrique à partir d'un enroulement primaire (L1) vers un enroulement secondaire (L2), le circuit résonant (21) étant couplé à l'enroulement primaire (L1), et les moyens d'éclairage étant alimentés en courant à partir de l'enroulement secondaire (L2),

l'enroulement primaire (L1) faisant partie intégrante du circuit résonant (21) côté primaire, et/ou le circuit résonant (21) étant constitué en tant que circuit résonant LLC,
**caractérisé en ce qu'**il présente les autres étapes suivantes :

- un signal de courant réel (S_iLLC) représentant le courant (iLLC) traversant le circuit résonant (21) et un signal de tension réelle (VL1) représentant la tension présente aux bornes de l'enroulement primaire (L1) sont renvoyés à une unité de commande (9),

l'unité de commande (9) déterminant, en partant du signal de courant réel (S_iLLC) et du signal de tension réelle (VL1) acquis côté primaire, une reproduction indirecte du courant côté secondaire.

14. Unité de commande (9), en particulier ASIC ou microcontrôleur ou version hybride de ceux-ci, pour la commande d'un circuit d'attaque (1) pour des moyens d'éclairage, en particulier pour une ou plusieurs LED, le circuit d'attaque (1) comprenant :

- un circuit (20), pouvant être alimenté par une tension (Vdc) et étant cadencé au moyen d'au moins un commutateur (LS, HS), qui alimente un circuit résonant (21),
- un transformateur d'adaptation (22) suivant le circuit résonant (21) pour le transfert d'énergie électrique à partir d'un enroulement primaire (L1) vers un enroulement secondaire (L2),

le circuit résonant (21) étant couplé à l'enroulement primaire (L1), et les moyens d'éclairage pouvant être alimentés en courant à partir de l'enroulement secondaire (L2), l'unité de commande (9) étant constituée pour commander au moins un commutateur (LS, HS) du circuit (20) cadencé,

l'enroulement primaire (L1) faisant partie intégrante du circuit résonant (21) côté primaire, et/ou le circuit résonant (21) étant constitué en tant que circuit résonant LLC,

**caractérisée en ce**

**qu'**un signal de courant réel (S_iLLC) représentant le courant (iLLC) traversant le circuit résonant (21) et un signal de tension réelle (VL1) représentant la tension présente aux bornes de l'enroulement primaire (L1) sont renvoyés à l'unité de commande (9), et **en ce que**

l'unité de commande (9) est constituée pour, en partant du signal de courant réel (S_iLLC) et du signal de tension réelle (VL1) acquis côté primaire, déterminer une reproduction indirecte du courant côté secondaire.

15. Luminaire, présentant une ligne de LED et un circuit d'attaque (1) selon l'une des revendications 1 à 12 pour l'alimentation en courant de la ligne de LED.

Fig. 1

Fig.2